# EUROPEAN PATENT SPECIFICATION

(11) **EP 2 478 579 B1**
(45) Date of publication and mention of the grant of the patent: **03.06.2015**
(21) Application number: 10760458.9
(22) Date of filing: 30.07.2010
(51) Int. Cl.: H01M 4/485, H01M 4/131, C01G 23/00, C01G 31/00, H01M 10/052

(54) **CATHODE MATERIALS FOR LITHIUM ION ACCUMULATORS BASED ON LITHIATED VANADIUM OXIDE COMPOUNDS**
KATHODENMATERIALIEN FÜR LITHIUM-IONEN-AKKUMULATOREN AUF DER BASIS VON LITHIIERTEN VANADIUMOXIDVERBINDUNGEN
MATÉRIAUX DE CATHODE POUR ACCUMULATEURS LITHIUM-ION À BASE DE COMPOSÉS D'OXYDE DE VANADIUM LITHIÉ

(30) Priority: 16.09.2009 SI 200900248
(43) Date of publication of application: 25.07.2012
(73) Proprietor: Kemijski Institut, 1000 Ljubljana (SI)
(72) Inventor: BELE, Marjan, 1000 Ljubljana (SI); DOMINKO, Robert, 1270 Litija (SI); VIDAL-ABARCA GARRIDO, Candela, E-14004 Cordoba (ES); PIVKO, Maja, 1000 Ljubljana (SI); GABERSCEK, Miran, 1230 Domzale (SI)
(74) Representative: Grünecker Patent- und Rechtsanwälte PartG mbB
(86) International application number: PCT/SI2010/000045
(87) International publication number: WO 2011/034508

(56) References cited:
- US-A- 6 103 419
- KUZMA M ET AL: "Electrochemical activity of Li2FeTiO4 and Li2MnTiO4 as potential active materials for Li ion batteries: A comparison with Li2NiTiO4", JOURNAL OF POWER SOURCES, ELSEVIER SA, CH, vol. 189, no. 1, 1 April 2009 (2009-04-01) , pages 81-88, XP025982668, ISSN: 0378-7753, DOI: DOI:10.1016/J.JPOWSOUR.2008.11.015 [retrieved on 2008-11-13]
- M. KUEZMA ET AL: "Detailed in situ investigation of the electrochemical processes in Li2FeTiO4 cathodes", JOURNAL OF THE ELECTROCHEMICAL SOCIETY, vol. 156, no. 10, 27 August 2009 (2009-08-27), pages A809-A816, XP002613763, DOI: 10.1149/1.3205458
- R. DOMINKO ET AL: "In-situ XAS study on Li2MnSiO4 and Li2FeSiO4 cathode materials", JOURNAL OF POWER SOURCES, vol. 189, 28 November 2008 (2008-11-28), pages 51-58, XP002613762, DOI: 10.1016/j.jpowsour.2008.11.077
- R. DOMINKO ET AL: "Electrochemical characteristics of Li(2-x)VTiO4 rock salt phase in Li-ion batteries", JOURNAL OF POWER SOURCES, 15 September 2010 (2010-09-15), XP002613764, DOI: 10.1016/j.jpowsour.2010.09.004
- R. DOMINKO: "Silicates and titanates as high-energy cathode materials for Li-ion batteries", PROCEEDINGS OF SPIE - THE INTERNATIONAL SOCIETY FOR OPTICAL ENGINEERING, vol. 7683, 76830J, 28 April 2010 (2010-04-28), XP002613765, DOI: 10.1117/12.850801

## Description

### Field of the Invention

The present invention relates to cathode materials for lithium ion accumulators based on vanadium oxide compounds that exhibit a layered structure, and are stabilized by means of titanium or aluminum. The compounds of this invention are active electrode materials based on NaCl type structure, and are represented by the general chemical formula LiₓVMO₄, wherein typically x=2, and *M* stands for titanium or aluminum or a mixture thereof having an oxidation state of +3 or +4.

The present invention pertains to the field of chemistry, specifically to the field of electrical energy storage on the base of reversible redox reactions. It relates to the utilization of the compounds based on lithium vanadium oxide stabilized, by means of titanium or aluminum, in lithium ion accumulators exhibiting activity in the potential window of 1V to 4.6V with respect to the potential of metallic lithium.

### Relevant Prior Art

Cathode materials for lithium ion accumulators are typically layered oxides of transition metals represented by the chemical formula LiMO₂ (M=Co, Ni, Mn). Their applicability is limited either by the amount of the deinserted (deintercalated) lithium in the case of LiCoO₂, or by a rather difficult synthesis in the case of LiNiO₂, or by the electrochemical instability of the layered oxide in the case of LiMnO₂. Recently, more and more research has been directed to the discovery of novel cathode materials based on the polyanionic structure XO₄ⁿ⁻, wherein X=S, P, As, Mo or W, for example LiFePO₄, and to materials having a spinel structure (LiMn₂O₄) with the sole aim to enhance the energy density of lithium ion accumulators. The spinel structure also enables the use of mixtures of various cations having an oxidation state of +3 and +4. In the literature have been known cases of synthesizing a LiVTiO₄ compound having a spinel structure, which means that the oxide structure is a three-dimensional (3D) network that is different from layered compounds wherein the oxides are in the form of a two-dimensional (2D) network; presented in the article J. Barker, M.Y. Saidi, J.L. Swoyer (2003), Electrochemical insertion properties of lithium vanadium titanate, LiVTi04: Solid State Ionics, volume 167, pages 413-418 and employed as active material in lithium ion accumulators. In the literature has also been known a group of cathode materials for lithium ion accumulators having a layered structure Li₂MTiO₄ (M= Fe, Mn, Ni, Co). Their synthesis and electrochemical characterization are described in the following articles: L. Sebastian, J. Gopalakrishnan, Li2MTiO4 (M = Mn, Fe, Co, Ni): New cation-disordered rocksalt oxides exhibiting oxidative deintercalation of lithium, Synthesis of an ordered Li2NiTiO4. JOURNAL OF SOLID STATE CHEMISTRY 172 (1): 171-177 APR 2003*; and in* M. Küzma, R. Dominko, A. Meden, D. Makovec, M. Bele, J. Jamnik, M. Gaberscek. Electrochemical activity of Li2FeTiO4 and Li2MnTiO4 as potential active materials for Li ion batteries: a comparison with Li2NiTiO4. JOURNAL OF POWER SOURCES, 2009, 189, 81-88*)*. No examples of the utilization of pure lithium vanadium oxides having a layered structure as active cathode material for lithium ion accumulators have been known as yet in the literature.

US 6,103,419 deals with cathode materials comprised of a lithiated zirconium, titanium or hafnium oxide of the formula Li₂MXO₄, where M is a transition metal and X is zirconium, titanium or hafnium.

### Technical problem

One of the goals of providing modern materials for lithium ion accumulators, is to achieve the highest possible energy density of the said materials, namely over 150 mAh/g. These new materials ought to be inexpensive, widely available and environmentally innocuous. The compounds based on vanadium, titanium and aluminum satisfy the conditions of availability and environmental acceptance. A higher energy density is, however, attained only by providing a higher specific capacity. The cathode materials that are at present utilized in lithium ion accumulators exhibit a specific capacity of up to 140 mAh/g; several known laboratory materials exhibit a practical capacity of 150-180 mAh/g. Recently mentioned materials are for example Li₂*Tm*TiO₄ and Li₂*Tm*SiO₄, wherein *Tm=* Mn, Fe, Ni, Co; their theoretical capacity is over 300 mAh/g. Their applicability is, however, limited owing to an exacting synthesis, poor resistance in the air, and a very low specific conductivity.

A solution to this problem is represented by active electrode materials for lithium ion accumulators exhibiting a layered structure, denominated as NaCl type structure, of the chemical formula LiₓV*M*O₄, wherein x = 0.1 - 3 and *M* stands for titanium or aluminum or a mixture thereof having an oxidation state of +3 or +4.

Large deposits of vanadium ensure its availability, and lithiated vanadium oxide is environmentally acceptable. The structure forming with titanium or aluminum of an oxidation state of +3 or +4 a layered structure, which may host more than one lithium for each unit of the chemical formula, combines all characteristics of a potential cathode material for lithium ion accumulators. This invention suggests the following two hitherto unknown active electrode materials based on lithiated vanadium oxide, Li₂VTiO₄ and Li₂VAlO₄ that exhibit an excellent electrochemical activity in lithium ion accumulators. According to this invention are manufactured electrode materials from initial precursors TiO₂, V₂O₅, Al₂O₃ and LiOH, which are dissolved or dispersed in an aqueous or organic medium in the presence of organic acids and/or dispergators.

### Description of the Solution of the Problem

This invention is represented by the following drawings and is described by the illustrative embodiments:
FIG. 1: a) is an X-ray powder diffractogram of the material based on Li₂VTiO₄ manufactured according to Example A. The powder diffractogram shows in the material the predominance of the crystalline compound Li₂VTiO₄ that crystallizes in the spatial group Fm3m, and b) is an X-ray powder diffractogram of the material on the base of Li₂VAlO₄ manufactured according to Example C. The powder diffractogram shows in the material the predominance of the crystalline compound Li₂VAlO₄ that crystallizes in the spatial group R-3m.

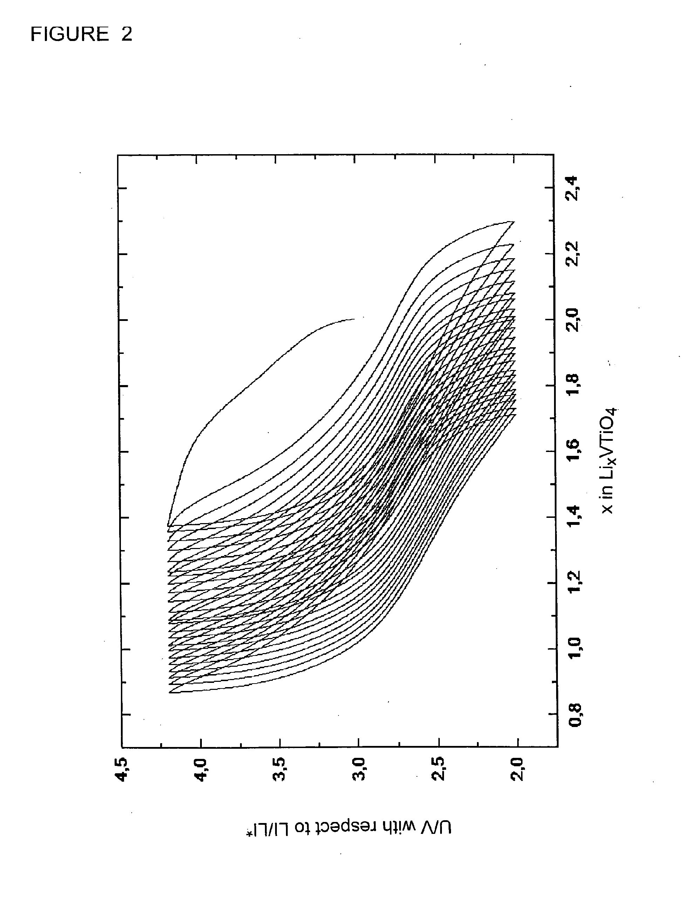

FIG. 2: is a plot of charge/discharge curves during the first 24 cycles for the material based on Li₂VTiO₄ in the potential window of 2V - 4.2V with respect to metallic lithium that was manufactured according to Example A. The current density amounted to 15.2 mA/g of the active material.

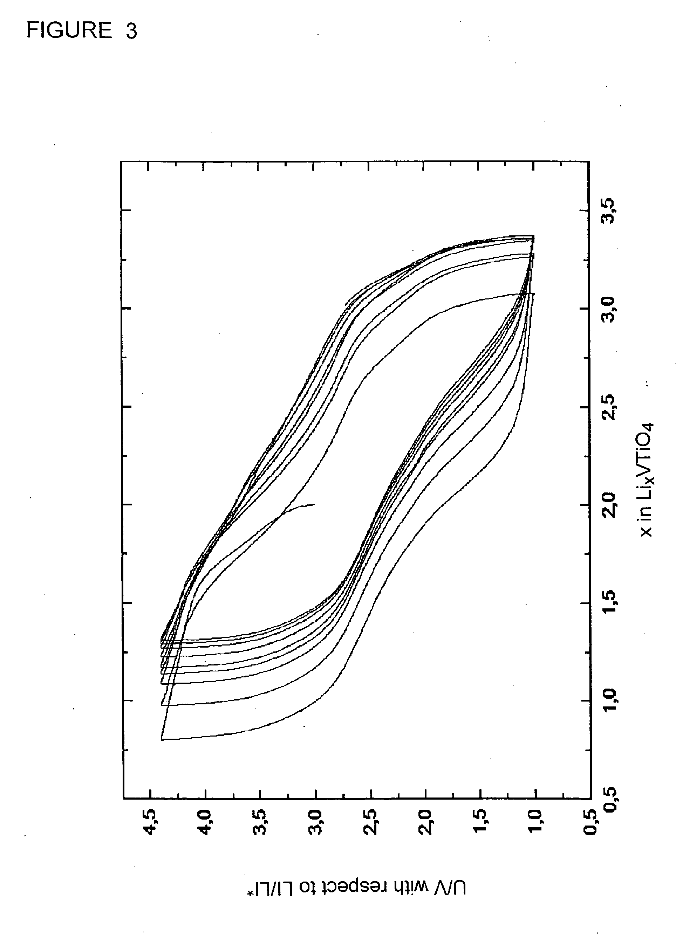

FIG. 3: is a plot of charge/discharge curves during the first 9 cycles for the material based on Li₂VTiO₄ in the potential window of 1V - 4.4V with respect to metallic lithium that was manufactured according to Example A. The current density amounted to 15.2 mA/g of the active material.

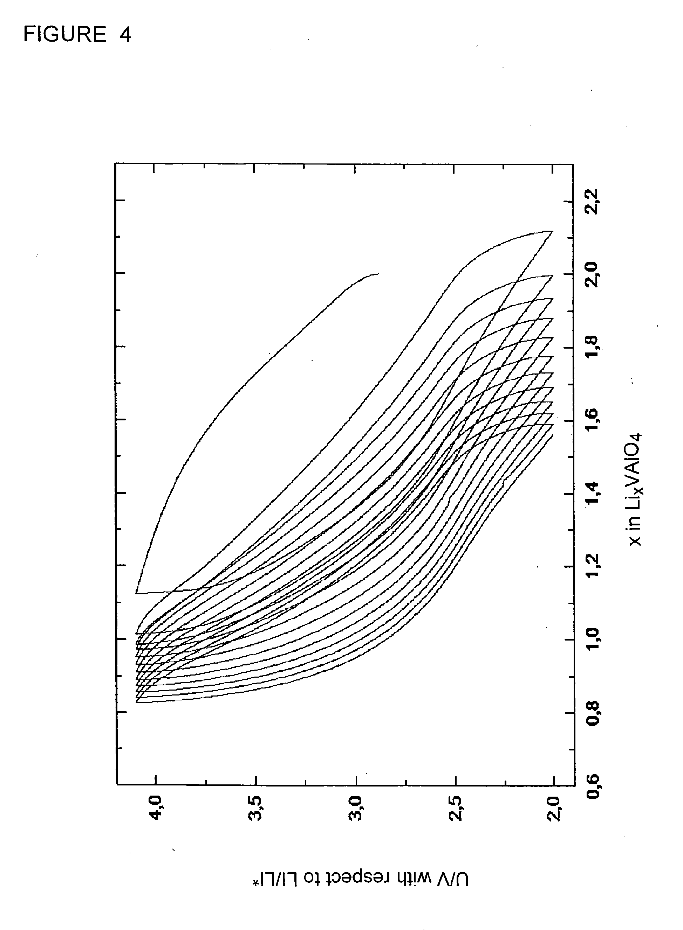

FIG. 4: is a plot of charge/discharge curves during the first 12 cycles for the material based on Li₂VAlO₄ in the potential window of 2V - 4.1V with respect to metallic lithium that was manufactured according to Example C. The current density amounted to 15.2 mA/g of the active material.

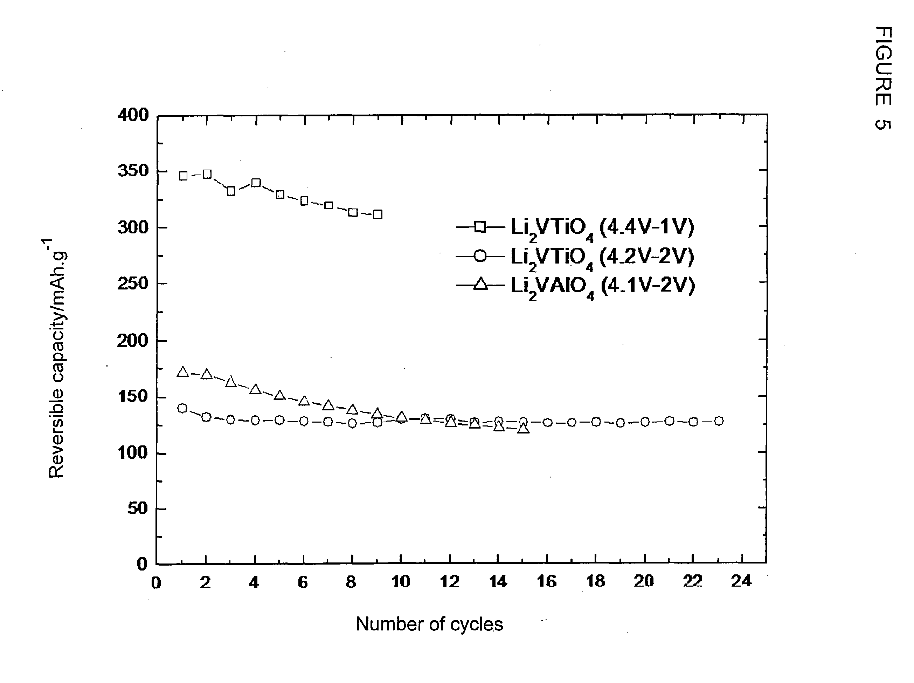

FIG. 5: depicts the reversible capacity of Li₂VTiO₄ in the potential window of 1V - 4.4V (squares), the reversible capacity of Li₂VTiO₄ in the potential window of 2V - 4.2V (circles), and the reversible capacity of Li₂VAlO₄ in the potential window of 2V - 4.1V (triangles) dependent on the performance cycle.

The essential novelty of the proposed cathode materials in comparison with the hitherto known active materials for lithium ion accumulators resides in the utilization of compounds based on lithiated vanadium oxides having a layered structure based on the NaCl type structure and represented by the chemical formula LiₓV*M*O₄, wherein x = 0.1 - 3 and *M* stands for titanium or aluminum or a mixture thereof having an oxidation state of +3 or +4. The new active materials for lithium ion accumulators can be represented by the following chemical formulas: LiₓVTiO₄ or LiₓVAlO₄, wherein the meaning of x may be within the range 1 to 3, preferably x=2. The proposed new cathode materials exhibit a considerable electroactivity (up to 2 times higher in comparison with the hitherto employed materials in lithium ion accumulators); "considerable electroactivity" means that such materials offer a capacity at least 150 mAh/g or more. The cathode materials according to this invention may be prepared from the initial precursors TiO₂, V₂O₅, Al₂O₃ and LiOH by dissolving or dispersing in an aqueous or in an organic medium, in the presence of organic acids and/or dispergators. The starting materials are in the form of powders having a particle size of 5 nm to 0.5 mm. The concentration of the precursors varies within the range 10g - 100g particles per liter of the liquid in which the particles are dispersed or dissolved. The dispersing and dissolving is performed with the aid of stirrers such as magnetic stirrers, anchor stirrers, propeller stirrers, and turbine stirrers; on the other hand, the dispersing is performed by means of ultrasound sonification, and shaking. The liquid is typically a mixture of organic solvents and water, wherein the mutual ratio of organic solvents and water depends on the employed precursors, organic acids as well as dispergators. The organic acids employed in the preparation of the dispersion are typically chosen from the group of organic acids having a low number of C atoms and optionally several carboxy groups per molecule, such as citric acid, oxalic acid, and oleic acid. The concentration of organic acids in the obtained dispersion is up to 500 g per one liter of the dispersion. The employed dispergators are typically chosen from the group of nonionic dispergators, such as Brij56, Tween 80, and Pluronic 123. The concentration of the dispergators in the obtained dispersion is within the range 0.001 mol/L to 10 mol/L. The obtained dispersions are either dried at a temperature of 25°C to 100°C or lyophilized under supercritical conditions and disintegrated with the aid of a crushing or grinding apparatus or a mill, and subjected to thermal treatment at a temperature over 500°C in an inert atmosphere (nitrogen, argon, xenon, helium) or in a reductive atmosphere (mixture of the said gases with hydrogen). The heat-up time is 1°C/min to 20°C/min; the oven dwell time is 1 minute to 100 hours. After completion of thermal treatment the fabricated cathode materials are stored in an inert atmosphere (in an argon-filled chamber containing less than 10 ppm of water), or in a vacuum package. The proposed cathode materials may be utilized for electrical energy storage purposes in lithium ion accumulators as materials for the construction of positive electrodes. The fabrication of the electrodes requires in addition to synthesized active particles also an appropriate binder and an electronic conductor. As typical binders may be used polytetrafluoroethylene, polyvinylidene fluoride, polyimide, ethylene propylene diene terpolymer, cellulose, gelatin, and similar polymers. The typically employed electronic conductors carbon black, graphite, metal particles or electron conductive polymers. The binder portion in the final electrode formulation is 2 % by weight to 40 % by weight, and the electronic conductor portion is from 2 % by weight to 20 % by weight. The electrode thickness is 10 micrometers to 500 micrometers; the coating density is 2mg/cm² to 50mg/cm². The fabricated positive electrode may be employed as active electrode in lithium batteries or in lithium accumulators.

### Synthesis of the active cathode material

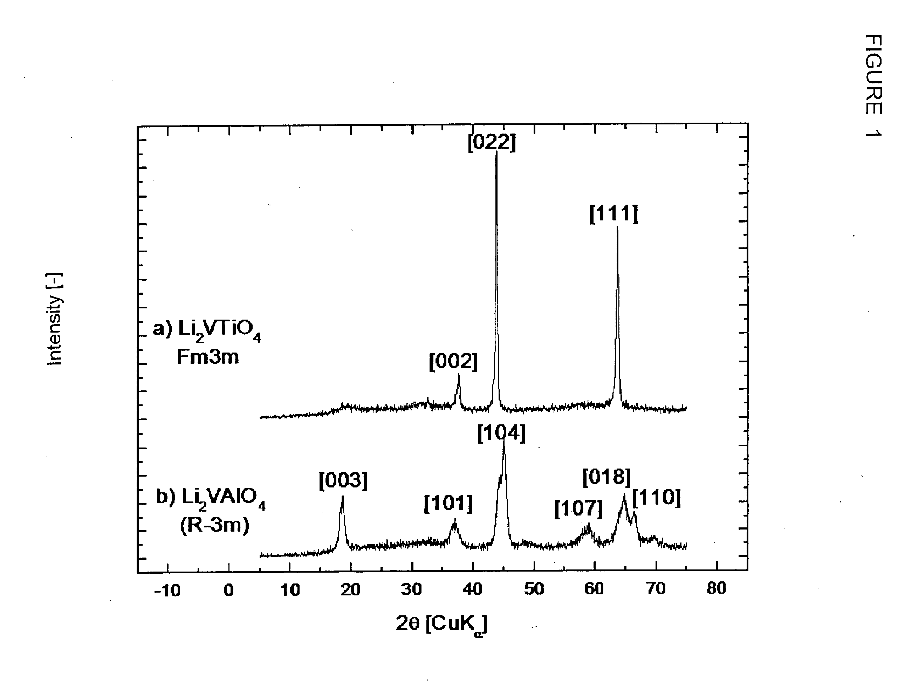

The two X-ray powder diffractograms as depicted in FIG 1 represent crystal structures of layered active electrode materials of general chemical formula LiₓV*M*O₄ intended for lithium ion accumulators. The diffractograms are indexed by Miller indices representing planes wherein the X-ray diffraction condition is fulfilled for the said structures. There exist several synthesis routes for the manufacture of layered lithiated oxides based on vanadium and titanium or aluminum, respectively. There ought to be provided small particles ensuring short lithium diffusion paths in the structure, and the presence of an electronic conductor (preferably amorphous carbon) warranting a good wiring of the cathode material..

### Description of electrode manufacturing:

An electrode composite based on active electrode materials for lithium ion accumulators having a general chemical formula LiₓV*M*O₄ is utilized for the manufacture of positive electrodes. The electrodes are manufactured by homogenizing the active material by means of electron conductive carbon black and a binder, whereupon the homogenous suspension is applied onto the surface of an aluminum current carrier. A typical active material coating over an aluminum current carrier is 1-5 mg/cm².

### Description of the Solution with Working Examples:

### Example A:

The process for the manufacture of Li₂VTiO₄ as active electrode material for the cathode of lithium ion accumulators is performed with organic acids as follows:
a) starting from titanium dioxide, lithium hydroxide and vanadium pentoxide;
b) preparing a colloidal solution of 0.002 - 0.02 moles of titanium dioxide in 9.7 - 97 mL of MiliQ water. All is dispersed together in an ultrasonic bath for about 2 hours. The obtained colloidal solution of titanium dioxide is supplemented with 0.004 - 0.04 moles of lithium hydroxide, and dispersed for another hour to dissolve the lithium hydroxide.
c) Separately are dissolved 0.0 - 0.12 moles of oxalic acid and 0.0 - 0.12 moles of citric acid in 9.5 - 95 mL of MiliQ water at 60°C to which is added 0.01 mol of vanadium pentoxide, and stirred overnight.
d) The solutions (b) and (c) are cooled down to room temperature and mixed together. The mixture is dried in a rotary evaporator at 60°C until a viscous liquid is obtained that is further dried in a drying oven at 60°C overnight to obtain a powder, or dried in vacuum.
e) The obtained powder is crushed in an achate mortar for 10 minutes. Thereafter, it is placed in the oven and heated under an argon atmosphere following a chosen temperature regime: the rates of heating and cooling are 1 - 20°C/min, the maximum temperature is 950°C. The baking time is in the range 1 minute to 100 hours. Immediately after baking the electrodes are transferred into a dry chamber containing less than 10 ppm of water and oxygen.
f) The obtained material is subjected to X-ray powder analysis to evaluate whether the diffractogram corresponds to the requested structure.
g) The obtained material is used for the manufacture of a cathode appropriate for electrochemical tests.

The molar ratio of Li:V:Ti ions in the final compound is 2±X:1±X:1±X.

### Example B:

The process for the manufacture of Li₂VTiO₄ as active electrode material for a cathode in lithium ion accumulators by means of nonionic dispergators is performed as follows:
a) starting from titanium dioxide, lithium hydroxide and vanadium pentoxide;
b) preparing a colloidal solution of 0.002 - 0.02 moles of titanium dioxide in 9.7 - 97 mL of MiliQ water. All together is dispersed in an ultrasonic bath for about 2 hours. The obtained colloidal solution of titanium dioxide is supplemented with 0.004 - 0.04 moles of lithium hydroxide and dispersed for another hour, in order to dissolve the lithium hydroxide. Thereafter is added 50 mL to 500 mL of the organic solvent containing the dissolved nonionic dispergator, and all is homogenized together in an ultrasonic bath.
c) Separately are dissolved 0.0 - 0.12 moles of oxalic acid and 0.0 - 0.12 moles of citric acid in 9.5 - 95 mL of MiliQ water at 60°C to which is added 0.01 mole of vanadium pentoxide, and stirred overnight. Then is added 50 mL to 500 mL of the organic solvent containing the dissolved nonionic dispergator with a concentration of 0.001 mol/L to 10 mol/L, and all is homogenized together in an ultrasonic bath for 1 hour.
d) The above solutions (b) and (c) are cooled down to room temperature and mixed together. The mixture is dried in a rotary evaporator at 60°C until a viscous liquid is obtained that is further dried in a drying oven at 60°C overnight to obtain a powder, or dried in vacuum.
e) The obtained powder is crushed in an achate mortar for 10 minutes. Thereafter, it is placed in the oven and heated under an argon atmosphere following a chosen temperature regime: the rates of heating and cooling are 1 - 20°C/min, the maximum temperature is 950°C. The baking time is in the range 1 minute to 100 hours. Immediately after baking the material is transferred into a dry chamber containing less than 10 ppm of water and oxygen.
f) The obtained material is subjected to X-ray powder analysis to evaluate whether the diffractogramme corresponds to the requested structure.
g) The obtained material is used for the manufacture of a cathode appropriate for electrochemical testing.

The molar ratio of Li:V:Ti ions in the final compound is 2±X:1±X:1±X.

### Example C:

The process for the manufacture of Li₂VAlO₄ as active electrode material for a cathode in lithium ion accumulators by means of organic acids is performed as follows:
a) starting from aluminum oxide (Al₂O₃), lithium hydroxide and vanadium pentoxide (V₂O₅);
b) preparing a solution of 0.0 - 0.12 moles of oxalic acid and 0.0 - 0.12 moles of citric acid in 10 - 100 mL of MiliQ water at 60°C to which is added 0.01 mol of vanadium pentoxide, and stirred overnight.
c) Separately are dissolved 0.004 - 0.04 moles of lithium hydroxide in 10 - 100 mL of MiliQ water.
d) The solution obtained in (b) is supplemented by 0.002 - 0.02 moles of aluminum oxide and all is dispersed together in an ultrasonic bath for about 2 hours.
e) To the obtained colloidal solution of aluminum oxide obtained in (d) is added the solution of lithium hydroxide obtained in (c).
f) The obtained suspension is dried in a rotary evaporator at 60°C until a powder is obtained.
g) The obtained powder is crushed in an achate mortar for 10 minutes. Thereafter, it is placed in the oven and heated under an argon atmosphere following a chosen temperature regime: the rates of heating and cooling are 1 - 20°C/min, the maximum temperature is 950°C. The baking time is in the range 1 minute to 100 hours. Immediately after baking the material is transferred into a dry chamber containing less than 10 ppm of water and oxygen.
h) The obtained material is subjected to X-ray powder analysis to evaluate whether the diffractogram corresponds to the requested structure.
g) The obtained material is used in the manufacture of a cathode appropriate for electrochemical tests.

The molar ratio of Li:V:Al ions in the final compound is 2±X:1±X:1±X.

### Example D:

### Assembling the accumulator

The operating electrode having a surface area of 2 cm² coated with 3-5 mg of the electrode composition based on the active electrode material for lithium ion accumulators exhibiting a layered structure, which is based on the NaCl type structure and is represented by the general chemical formula LiₓV*M*O₄, is dipped into an aprotic electrolyte (typically 1 M solution of LiPF₆ in a mixture of ethylene carbonate and dimethyl carbonate). The selected negative electrode is made of metallic lithium, graphite or similar anode active materials for lithium ion accumulators. The electrodes are assembled into an active electrochemical cell, and separated by a typical lithium battery separator permeable to lithium ions. The electrochemical cell is installed into a prefabricated accumulator housing in a dry chamber (argon atmosphere with water content < 1ppm (1mg/L)). The accumulator thus obtained is subjected to capacity and reversibility tests.

### Accumulator testing

The current leads of the fabricated accumulator are clamped to the cable of the instrument that enables the application of varying values of constant electrical current, and a simultaneous measurement of the accumulator's time-dependent voltage change. The voltage range of the operating accumulator is limited under oxidation within 4 V with respect to metallic lithium to 4.6 V with respect to metallic lithium, and under reduction within 1 V with respect to metallic lithium to 2 V with respect to metallic lithium. The capacitance of the accumulator is calculated from the electric charge flow normalized to the mass of the electrode composite.

## Claims

1. A cathode material for lithium ion accumulators based on lithiated vanadium oxide compounds, represented by the general chemical formula LiₓV*M*O₄, wherein x = 0.1 - 3, and *M* stands for titanium or aluminum or a mixture thereof having an oxidation state of +3 or +4, **characterized in that** it exhibits a layered structure on the base of NaCl type structure.

2. The cathode material as claimed in claim 1, **characterized in that** it is represented by the chemical formula LiₓVTiO₄.

3. The cathode material as claimed in claim 2, **characterized in that** 1<x<3.

4. The cathode material as claimed in claim 2, **characterized in that** x=2.

5. The cathode material as claimed in claim 1, **characterized in that** it is represented by the chemical formula LiₓVAlO₄.

6. The cathode material as claimed in claim 5, **characterized in that** 1<x<3.

7. The cathode material as claimed in claim 5, **characterized in that** x=2.

8. The cathode material as claimed in claims 1-7, **characterized in that** it exhibits electroactivity, which means that from the material may be electrochemically deinserted (deintercalated) and then again inserted (intercalated) at least 0.2 moles of lithium per 1 mol of the compound LiₓV*M*O₄.

9. A process for the manufacture of the cathode materials as claimed in claims 1-8, **characterized in that** the initial precursors TiO₂, V₂O₅, Al₂O₃ and LiOH are dissolved or dispersed in an aqueous medium or in an organic medium in the presence of organic acids and/or dispergators.

10. The process as claimed in claim 9, **characterized in that** the employed organic acids are chosen from the group of carboxylic organic acids such as citric acid, and from the group of hydroxy organic acids such as ascorbic acid, and that the employed dispergators are chosen from the group of nonionic dispergators.

11. The cathode material as claimed in claims 1-8, **characterized in that** it is employed for the electrical energy storage in lithium ion accumulators.

12. Use of the cathode material as claimed in claim 11 as an electrochemically active positive electrode in lithium batteries or accumulators under addition of an appropriate binder and an electric conductor.

13. A positive electrode comprising the cathode material of any of claims 1 to 8, a binder and an electronic conductor.

14. The positive electrode as claimed in claim 13, **characterized in that** the binder is chosen from polytetrafluoroethylene, polyvinylidene fluoride, polyimide, ethylene propylene diene terpolimer, and similar polymers.

15. The positive electrode as claimed in claim 13, **characterized in that** the electronic conductor is chosen from carbon black, graphite, metal particles or electron conductive polymers.

16. A lithium battery or accumulator, **characterized in that** it comprises the positive electrode of any of claims 13 -15.

## Patentansprüche

1. Kathodenmaterial für Lithiumionenakkumulatoren auf der Basis von lithiierten Vanadiumoxidverbindungen, die durch die allgemeine chemische Formel LiₓV*M*O₄ wiedergegeben sind, wobei x = 0,1 - 3, und *M* steht für Titan oder Aluminium oder eine Mischung davon mit einer Oxidationsstufe von +3 oder +4, **dadurch gekennzeichnet, dass** es eine Schichtstruktur auf der Basis einer Struktur vom NaCl-Typ aufweist.

2. Kathodenmaterial nach Anspruch 1, **dadurch gekennzeichnet, dass** es durch die chemische Formel LiₓTiO₄ wiedergegeben ist.

3. Kathodenmaterial nach Anspruch 2, **dadurch gekennzeichnet, dass** 1<x<3.

4. Kathodenmaterial nach Anspruch 2, **dadurch gekennzeichnet, dass** x=2.

5. Kathodenmaterial nach Anspruch 1, **dadurch gekennzeichnet, dass** es durch die chemische Formel LiₓVAlO₄ wiedergegeben ist.

6. Kathodenmaterial nach Anspruch 5, **dadurch gekennzeichnet, dass** 1<x<3.

7. Kathodenmaterial nach Anspruch 5, **dadurch gekennzeichnet, dass** x=2.

8. Kathodenmaterial nach den Ansprüchen 1-7, **dadurch gekennzeichnet, dass** es eine Elektroaktivität aufweist, was bedeutet, dass aus dem Material wenigstens 0,2 mol Lithium pro 1 mol der Verbindung LiₓV*M*O₄ elektrochemisch ausgelagert (deinterkaliert) und anschließend wieder eingelagert (interkaliert) werden können.

9. Verfahren zur Herstellung der Kathodenmaterialien nach den Ansprüchen 1-8, **dadurch gekennzeichnet, dass** die Ausgangsvorstufen TiO₂, V₂O₅, Al₂O₃ und LiOH in einem wässrigen Medium oder in einem organischen Medium in Gegenwart von organischen Säuren und/oder Dispergiermitteln gelöst oder dispergiert werden.

10. Verfahren nach Anspruch 9, **dadurch gekennzeichnet, dass** die eingesetzten organischen Säuren ausgewählt sind aus der Gruppe von organischen Carbonsäuren wie Citronensäure und aus der Gruppe von organischen Hydroxycarbonsäuren wie Ascorbinsäure, und dass die eingesetzten Dispergiermittel ausgewählt sind aus der Gruppe von nichtionischen Dispergiermitteln.

11. Kathodenmaterial nach den Ansprüchen 1-8, **dadurch gekennzeichnet, dass** es für die Speicherung von elektrischer Energie in Lithiumionenakkumulatoren eingesetzt wird.

12. Verwendung des Kathodenmaterials nach Anspruch 11 als eine elektrochemisch aktive positive Elektrode in Lithiumbatterien oder -akkumulatoren unter Zugabe eines geeigneten Bindemittels und eines elektrischen Leiters.

13. Positive Elektrode umfassend das Kathodenmaterial nach einem der Ansprüche 1 bis 8, ein Bindemittel und einen Elektronenleiter.

14. Positive Elektrode nach Anspruch 13, **dadurch gekennzeichnet, dass** das Bindemittel ausgewählt ist aus Polytetrafluorethylen, Polyvinylidenfluorid, Polyimid, Ethylen-Propylen-Dien-Terpolymer und ähnlichen Polymeren.

15. Positive Elektrode nach Anspruch 13, **dadurch gekennzeichnet, dass** der Elektronenleiter ausgewählt ist aus Ruß, Graphit, Metallteilchen oder elektronenleitenden Polymeren.

16. Lithiumbatterie oder -akkumulator, **dadurch gekennzeichnet, dass** sie bzw. er die positive Elektrode nach einem der Ansprüche 13-15 umfasst.

## Revendications

1. Matériau de cathode pour accumulateurs lithium-ion à base de composés d'oxyde de vanadium lithiés, représenté par la formule chimique générale LiₓV*M*O₄, dans laquelle x = 0,1 - 3 et *M* représente le titane, l'aluminium ou un mélange de ceux-ci, ayant un nombre d'oxydation de +3 ou +4, **caractérisé en ce qu'**il présente une structure stratifiée basée sur une structure de type NaCl.

2. Matériau de cathode selon la revendication 1, **caractérisé en ce qu'**il est représenté par la formule chimique LiₓVTiO₄.

3. Matériau de cathode selon la revendication 2, **caractérisé en ce que** 1<x<3.

4. Matériau de cathode selon la revendication 2, **caractérisé en ce que** x=2.

5. Matériau de cathode selon la revendication 1, **caractérisé en ce qu'**il est représenté par la formule chimique LiₓVAlO₄.

6. Matériau de cathode selon la revendication 5, **caractérisé en ce que** 1<x<3.

7. Matériau de cathode selon la revendication 5, **caractérisé en ce que** x=2.

8. Matériau de cathode selon les revendications 1 à 7, **caractérisé en ce qu'**il présente une électroactivité, dans la mesure où au moins 0,2 mole de lithium par mole du composé LiₓV*M*O₄ peut être désinséré (désintercalé) électrochimiquement puis de nouveau inséré (intercalé).

9. Procédé de fabrication pour des matériaux de cathode selon les revendications 1 à 8, **caractérisé en ce que** les précurseurs initiaux TiO₂, V₂O₅, Al₂O₃ et LiOH sont dissous ou dispersés en milieu aqueux ou en milieu organique en présence d'acides organiques et/ou de dispersants.

10. Procédé selon la revendication 9, **caractérisé en ce que** les acides organiques employés sont choisis parmi le groupe des acides organiques carboxyliques tels que l'acide citrique, et parmi le groupe des acides organiques hydroxylés tels que l'acide ascorbique, et **en ce que** les dispersants employés sont choisis parmi le groupe des dispersants non ioniques.

11. Matériau de cathode selon les revendications 1 à 8, **caractérisé en ce qu'**il est employé pour le stockage d'énergie électrique dans des accumulateurs lithium-ion.

12. Utilisation du matériau de cathode selon la revendication 11 comme électrode positive électrochimiquement active dans des batteries ou des accumulateurs au lithium par l'addition d'un liant approprié et d'un conducteur électrique.

13. Électrode positive comprenant le matériau de cathode selon l'une quelconque des revendications 1 à 8, un liant et un conducteur d'électrons.

14. Électrode positive selon la revendication 13, **caractérisée en ce que** le liant est choisi parmi le polytétrafluoroéthylène, le polyfluorure de vinylidène, les polyimides, l'éthylène-propylène-diène terpolymère, et des polymères similaires.

15. Électrode positive selon la revendication 13, **caractérisée en ce que** le conducteur d'électrons est choisi parmi le noir de carbone, le graphite, des particules métalliques ou des polymères conducteurs d'électrons.

16. Batterie ou accumulateur au lithium, **caractérisé en ce qu'**il comprend l'électrode positive selon l'une quelconque des revendications 13 à 15.
